# EUROPEAN PATENT APPLICATION

(11) **EP 4 744 854 A1**
(43) Date of publication of application: **20.05.2026**
(21) Application number: 24842788.2
(22) Date of filing: 22.04.2024
(51) Int. Cl.: B29B 17/04, B02C 4/02, C08J 11/16

(54) **METHOD FOR RECYCLING POLYURETHANE FOAM**

(30) Priority: 14.07.2023 JP 2023116158
(71) Applicant: Archem Inc., Tokyo 108-0075 (JP); NAGASAKI UNIVERSITY, Nagasaki 852-8521 (JP)
(72) Inventor: KITANO, Hajime, Tokyo 108-0075 (JP); ONIKI, Yoshihiko, Tokyo 108-0075 (JP); MOTOKUCHO, Suguru, Nagasaki-shi, Nagasaki 852-8521 (JP)
(74) Representative: Scott, Stephen John
(86) International application number: PCT/JP2024/015786
(87) International publication number: WO 2025/017988

(57) **Abstract**

Provided is an efficient method of recycling polyurethane foam. The method of recycling polyurethane foam includes a grinding step of passing polyurethane foam between a pair of rolls and compressing and grinding the polyurethane foam between the pair of rolls and a hydrolysis step of hydrolyzing treated material after the grinding step.

## Description

### TECHNICAL FIELD

The present disclosure relates to a method of recycling polyurethane foam.

### BACKGROUND

Patent Literature (PTL) 1 discloses a decomposition treatment method for a urea compound. In this decomposition treatment method for a urea compound, water that is in a liquid or gaseous state is used to hydrolyze a urea compound in carbon dioxide that is in a supercritical state or subcritical state, and a corresponding amine is recovered. PTL 1 discloses that in this decomposition treatment method for a urea compound, the mass ratio of a urea compound and water during hydrolysis is water/urea compound = 20/1 to 160/1, and also discloses that diffusion of water to the urea compound may be insufficient in a case in which the amount of water is too small.

PTL 2 discloses a method of grinding a thermosetting resin. This method of grinding a thermosetting resin includes a compressive grinding step of grinding a thermosetting resin through compressive grinding. This compressive grinding step is a roll compressive grinding step in which the thermosetting resin is loaded between a pair of rolls that rotate while being forced in a direction in which the rolls move closer together so as to perform compressive grinding of the thermosetting resin. In the roll compressive grinding step, water may be added between the pair of rolls when the thermosetting resin is loaded, and the addition of water during loading reduces the average particle diameter of the resultant urethane fine powder.

Non-Patent Literature (NPL) 1 discloses an environmentally friendly polyurethane degradation method. NPL 1 discloses that the main application of polyurethane is in urethane foam, which is a foamed product, and that urethane foam has remarkably low density compared to other polymeric materials. NPL 1 also discloses that a hydrolysis reaction of polyurethane using CO₂ (carbon dioxide) and water has extremely low environmental impact.

### CITATION LIST

### Patent Literature

PTL 1: WO 2009/130842 A1
PTL 2: JP 2002-326224 A

### Non-Patent Literature

NPL 1: Development of Environmentally Friendly Polyurethane Degradation Methods, Journal of The Adhesion Society of Japan, 2018, Vol. 54, No. 9, p. 343-348, Suguru MOTOKUCHO [search date: May 31, 2023], Internet <https://www.jstage.jst.go.jp/article/adhesion/54/9/54_9-4/_pdf/- char/ja>

### SUMMARY

### (Technical Problem)

Polyurethane is a compound of a polyol and an amine. By hydrolyzing polyurethane into a polyol and an amine, it is possible to recycle the polyurethane as the raw materials that are used to synthesize the polyurethane. However, polyurethane foam is bulky, which results in problems of difficulty of handling and inefficiency during hydrolysis treatment. For example, as a result of polyurethane foam being bulky and having a low bulk density, it is difficult to load the polyurethane foam with high density into a decomposition treatment tank where hydrolysis is to be performed, resulting in low efficiency of hydrolysis treatment. Specifically, this increases the size of the decomposition treatment tank and also increases the amount of water that is used and the amount of energy that is required in hydrolysis. Moreover, the concentrations of a polyol and an amine in treated material after hydrolysis are low, which makes recovery of the polyol and amine inefficient. For these reasons, there is demand for an efficient method of recycling polyurethane foam.

The present disclosure was made in light of the circumstances set forth above and is aimed at the provision of an efficient method of recycling polyurethane foam.

### (Solution to Problem)

A method of recycling polyurethane foam according to the present disclosure for achieving the aim set forth above comprises:
a grinding step of passing polyurethane foam between a pair of rolls and compressing and grinding the polyurethane foam between the pair of rolls; and
a hydrolysis step of hydrolyzing treated material after the grinding step.

### (Advantageous Effect)

According to the present disclosure, it is possible to provide an efficient method of recycling polyurethane foam.

### BRIEF DESCRIPTION OF THE DRAWINGS

In the accompanying drawings:
FIG. 1 is a flow chart of a method of recycling polyurethane foam according to a present embodiment;
FIG. 2 is an explanatory diagram illustrating an overview of a method of recycling polyurethane foam according to a present embodiment;
FIG. 3 is a side-view schematic diagram of a roll part of a roll press;
FIG. 4 is a front-view explanatory diagram of a roll part of a roll press; and
FIG. 5 is a flow chart of a grinding step.

### DETAILED DESCRIPTION

The following describes a method of recycling polyurethane foam according to an embodiment of the present disclosure with reference to the drawings. First, an overview of the method of recycling polyurethane foam according to the present embodiment is described.

The method of recycling polyurethane foam according to the present embodiment (hereinafter, also referred to as the "present recycling method") includes: a grinding step of passing polyurethane foam serving as treated material between a pair of rolls and compressing and grinding the polyurethane foam between the pair of rolls; and a hydrolysis step of hydrolyzing the treated material after the grinding step.

The present recycling method enables efficient recycling of polyurethane foam.

Specifically, compressive grinding of bulky polyurethane foam between rolls makes it possible to obtain a product having high bulk density, and thus the polyurethane can be loaded with high density into a decomposition treatment tank where the polyurethane is to be hydrolyzed into a polyol and an amine. By enabling the loading of polyurethane foam with high density into a decomposition treatment tank, it is possible to increase the efficiency of hydrolysis treatment in the decomposition treatment tank and enable efficient recycling of the polyurethane foam. The following provides a detailed description of the method of recycling polyurethane foam according to the present embodiment.

The method of recycling polyurethane foam according to the present embodiment (present recycling method) includes a grinding step of compressive grinding polyurethane foam serving as treated material between a pair of rolls and a hydrolysis step of hydrolyzing the treated material after the grinding step as described above. In addition to the grinding step and the hydrolysis step, the present recycling method can further include a separation and cutting step of cutting and/or sorting a treatment subject (for example, waste material) including polyurethane foam and separating polyurethane foam that is to be subjected to the grinding step, a water addition step of adding water to the treated material of the grinding step, and a separation and recovery step of separating and recovering a polyol and an amine that are obtained through hydrolysis.

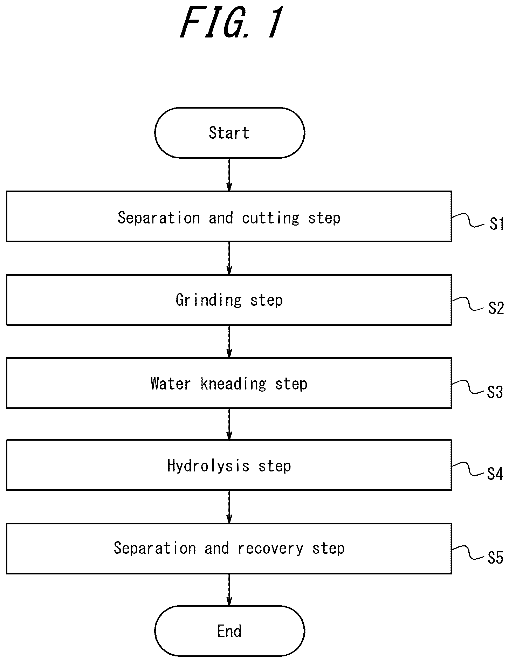

As one example, a separation and cutting step (Step S1), a grinding step (Step S2), a water kneading step (Step S3; one example of a water addition step), a hydrolysis step (Step S4), and a separation and recovery step (Step S5) are performed in this order in the present recycling method as in a flow chart illustrated in FIG. 1. Note that PFU in FIG. 1 indicates polyurethane foam.

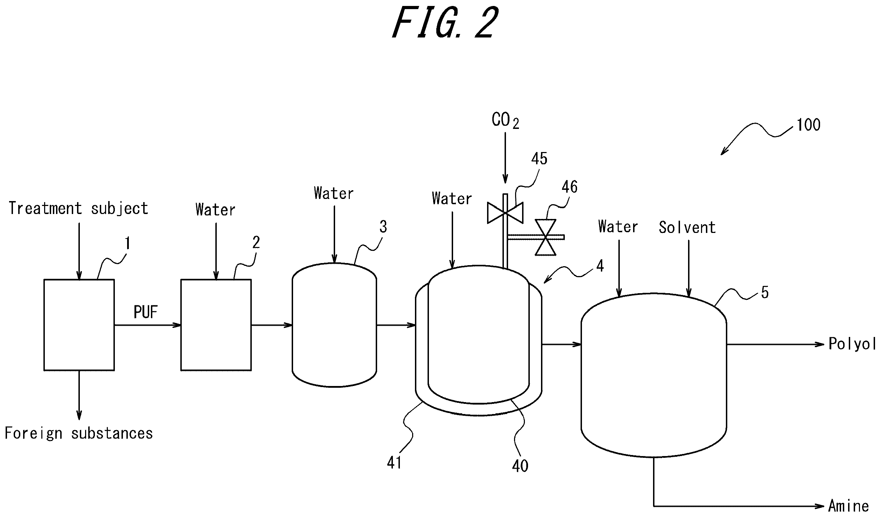

In one example, this recycling method is implemented through a plant 100 illustrated in FIG. 2. The plant 100 can include a separating and cutting device 1 that performs the separation and cutting step, a roll pressing device 2 that performs the grinding step, a stirrer 3 that performs the water kneading step, a decomposition treatment tank 4 that performs the hydrolysis step, and a separating tank 5 that performs the separation and recovery step.

The separation and cutting step is a step in which a treatment subject including polyurethane foam, such as a seat of a scrap vehicle, is broken up or cut by the separating and cutting device 1 and in which polyurethane foam that is the subject of recycling in the present recycling method and other foreign substances are sorted and separated so as to remove the polyurethane foam. The removed polyurethane foam is preferably adjusted by cutting or the like to a shape and size that can be treated in the grinding step. The separating and cutting device 1 may, for example, be a cutting device, a fracturing device, a sorting device, a separating device, or another such device for waste material treatment that is used individually, or may be a combination of such devices.

Besides a seat of a scrap vehicle, the treatment subject including polyurethane foam may be a bed, a sofa, heat insulating material, or the like. No limitations are placed on the type of treatment subject so long as it includes polyurethane foam and so long as this polyurethane foam can be separated.

In the separation and cutting step, the polyurethane foam may, as one example, be separated as lumpy foam pieces of approximately 10 cm in thickness, 20 cm in width, and 30 cm in length. The foam pieces that have been separated in the separation and cutting step are subjected to the subsequently described grinding step. The foam pieces should be of a size that does not cause handling problems in the grinding step.

In the grinding step, the foam pieces described above are subjected to compressive grinding as treated material by the roll pressing device 2. Compressive grinding of the foam pieces by the roll pressing device 2 may be performed once or may be repeated two or more times. In the following description, when foam pieces, or treated pieces resulting from compressive grinding of foam pieces by the roll pressing device 2, are supplied to the roll pressing device 2 as treated material and are subjected to grinding treatment, this may also be referred to as a "pass". For example, phrases such as "two passes" or "passed twice" mean that compressive grinding of foam pieces or treated pieces by the roll pressing device 2 is repeated twice. Moreover, the number of times that foam pieces or treated pieces are supplied to the roll pressing device 2 may also be referred to as the "number of passes".

Increasing the number of passes may reduce the average particle diameter and increase the bulk density of treated material after the grinding step. Note that the treated material after the grinding step in the present embodiment is treated pieces after a final pass.

The average particle diameter of the treated material (treated pieces) after the grinding step is 500 µm or less. The average particle diameter of the treated material after the grinding step is preferably 160 µm or less. This is because it is easier to achieve a high bulk density when the average particle diameter of the treated material after the grinding step is 160 µm or less. Note that the average particle diameter in the present embodiment is the volume-average diameter based on a particle size distribution by volume measured using a laser diffraction/scattering particle size analyzer (produced by Seishin Enterprise Co., Ltd.; model: LMS-3000). In the present embodiment, methanol is used as a solvent in measurement of the average particle diameter. Dispersing of the treated material in measurement of the average particle diameter is performed using a wet dispersing unit (Hydro MV) accompanying the above described analyzer and is performed with a set output of 10% for a built-in ultrasonic probe and a rotation speed of 1,750 rpm for a built-in stirrer.

The bulk density of the treated material (treated pieces) after the grinding step is preferably 0.10 g/cc (g/cm³) or more, and more preferably 0.16 g/cc or more. When the particle diameter of the treated material after the grinding step is 0.10 g/cc or more, treatment efficiency in the subsequently described hydrolysis treatment step improves.

Note that the bulk density of the treated material (treated pieces) in the present embodiment is the static bulk density according to a funnel loading method. The static bulk density in the present embodiment is determined by causing the treated material to gently flow into a vessel having a capacity of 1,000 cc using a funnel having an outlet diameter of 10 mm until a state in which the treated material is overflowing from the vessel is reached, leveling off an opening of the vessel, measuring the mass of the treated material that has been loaded into the vessel, and determining the static bulk density based on this mass and the capacity of the vessel. The bulk density of the treated material in the present embodiment is the density in a dry state where the treated material does not contain water. Specifically, the bulk density of the treated material in the present embodiment is a value measured after the treated material that is a measurement subject of bulk density has been dried overnight (16 hours) in a shelf-type drying cabinet in which an internal atmosphere is set to 60°C.

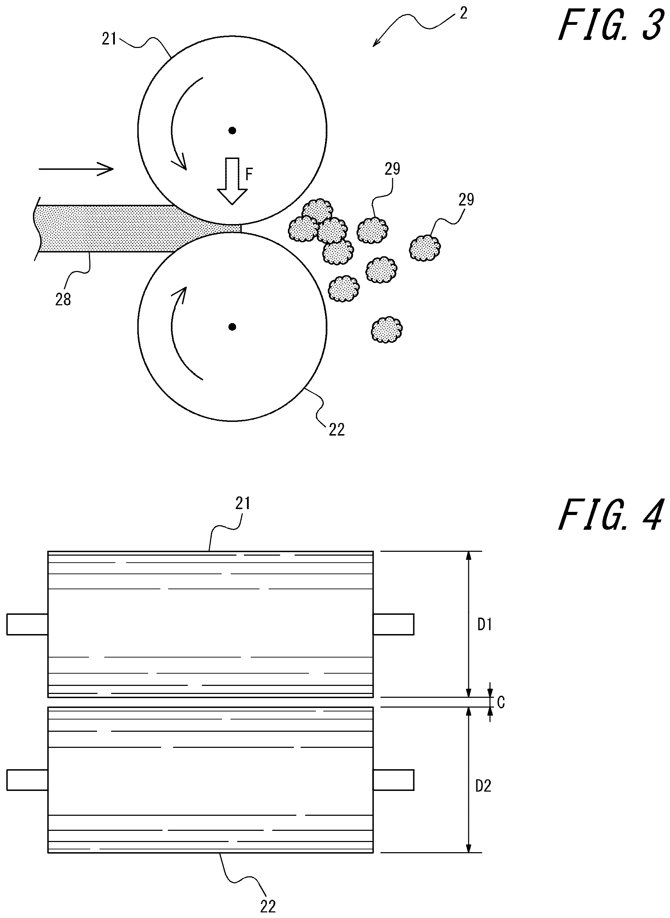

As illustrated in FIG. 3 and FIG. 4, the roll pressing device 2 includes a roll 21 having a cylindrical shape and a roll 22 having a cylindrical shape of the same diameter as the roll 21. The roll 22 is arranged adjacently to the roll 21 with an axial direction of a central axis of the cylindrical shape of the roll 22 arranged along an axial direction of a central axis of the cylindrical shape of the roll 21. FIG. 3 illustrates a schematic diagram for when the rolls 21 and 22 of the roll pressing device 2 are viewed along the axial direction of these rolls 21 and 22 (i.e., in a side-view). FIG. 4 illustrates a schematic diagram for when the rolls 21 and 22 of the roll pressing device 2 are viewed perpendicularly relative to an imaginary plane coinciding with the central axes of these rolls 21 and 22 (i.e., in a front-view).

The roll 21 and the roll 22 are driven by a drive source such as a motor and each rotate with the central axis of the cylindrical shape thereof as a rotational axis. The roll 21 and the roll 22 rotate in opposite directions to each other. When foam pieces or treated pieces (raw material 28) are supplied between the roll 21 and the roll 22 from a side where the surface of the roll 21 and the surface of the roll 22 come closer together, the foam pieces or treated pieces are pulled between the rolls 21 and 22 through friction with the surface of the roll 21 and the surface of the roll 22, these foam pieces or treated pieces are compressively ground between the rolls 21 and 22, and ground treated pieces (ground material 29) are discharged out of the rolls 21 and 22. Between the rolls 21 and 22, compressive grinding proceeds through compression between the rolls 21 and 22 and through friction between the rolls 21 and 22.

In the present embodiment, the rotational axis of the roll 21 may be configured such that it can be brought closer to or separated further from the rotational axis of the roll 22, for example. The clearance C (refer to FIG. 4) between the rolls 21 and 22 may, for example, be not less than 0 mm and not more than 2 mm.

The roll 21 may be forced toward the roll 22. In one example, this force (i.e., a load F applied between the rolls 21 and 22 (refer to FIG. 3)) may be not less than 1 t/cm and not more than 3 t/cm (not less than 9.8 kN/cm and not more than 29.4 kN/cm) per unit length in an axial direction between the rolls 21 and 22. In the following description, a value obtained when the load F applied between the rolls 21 and 22 is converted to a load per unit length (cm) in an axial direction between the rolls 21 and 22 may also be referred to as the "line pressure".

In a case in which a plurality of passes of grinding of foam pieces are performed by the roll pressing device 2, the line pressure may be constant (i.e., the same) in each of the passes or the line pressure may differ in each of the passes. For example, it may be the case that a small line pressure (less than 1 t/cm; for example, 0.07 t/cm) is adopted as pre-treatment in a first pass and that a larger line pressure (for example, 2 t/cm) is adopted from a second pass onwards.

The rotation speed of the rolls 21 and 22 may, in terms of circumferential speed of the rolls 21 and 22, be not less than 0.050 m/s and not more than 0.500 m/s, for example.

The diameters D1 and D2 of the rolls 21 and 22 may be not less than 150 mm and not more than 600 mm, for example. The length (width) of the rolls 21 and 22 in the axial direction may be not less than 150 mm and not more than 600 mm, for example. The diameter and axial direction length of the rolls 21 and 22 can be set as the same size.

In the grinding step, addition of water (another example of a water addition step) may be performed (one example of an in-grinding water addition step). In a case in which water is added in the grinding step, water may be added to the foam pieces serving as treated material before the foam pieces are subjected to a first pass. Alternatively, in a case in which water is added in the grinding step, water may be added to treated material during a pass (i.e., while foam pieces or treated pieces serving as the treated material are undergoing compressive grinding), or water may be added to treated pieces partway through the performance of a plurality of passes (between passes). In a case in which water is added during a pass, water may be added prior to supply to the rolls 21 and 22. In a case in which water is added between passes, water may be added to treated pieces after a directly preceding pass and then these treated pieces may be subjected to a next pass.

The total added amount of water in a case in which water is added to the treated material in the grinding step (i.e., the amount of water added to the treated material up to the end of the grinding step) may be not less than 3% and not more than 20% (for example, 15%) relative to the mass of polyurethane in the treated material. The addition of water in the grinding step may enable more uniform pressing of polyurethane foam in a roll press, improve grinding efficiency, and increase the bulk density of the treated material after the grinding step.

Note that addition of water in the grinding step is not essential and can be omitted.

In the grinding step, disintegration treatment may be performed to disintegrate the treated material (treated pieces) after the grinding step of foam pieces. The disintegration treatment may be performed through stirring by a stirring device such as a Henschel mixer, for example. Disintegration treatment may increase the bulk density of the treated material. For example, the bulk density of the treated material may increase by 30% through disintegration treatment.

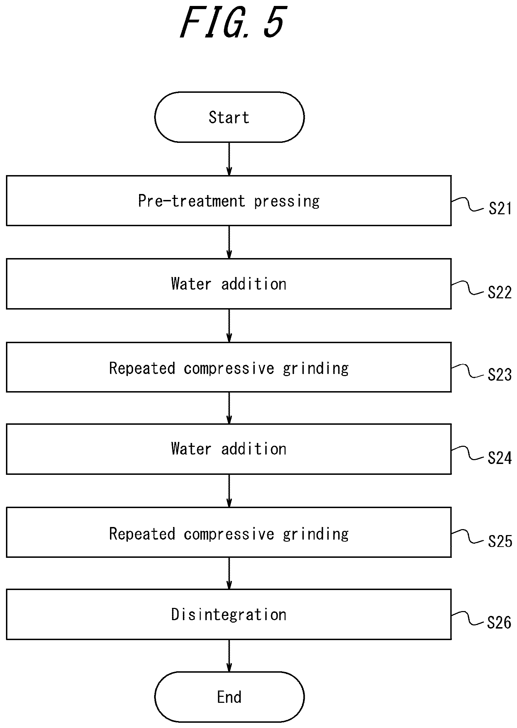

In other words, in one example, the grinding step may be performed as in a flow chart illustrated in FIG. 5. In more detail, the grinding step may include pre-treatment pressing performed with a line pressure that is lower than that in subsequent passes (Step S21), addition of water (for example, addition of 10% of water relative to the mass of polyurethane) to treated pieces after the pre-treatment pressing (Step S22), passing (compressive grinding) performed repeatedly (for example, 5 passes; Step S23), further addition of water (for example, addition of a further 5% of water) to the treated pieces (Step S24), further passing (compressive grinding) performed repeatedly (for example, 3 passes; Step S25), and disintegration through stirring by a Henschel mixer, for example (Step S26).

The water kneading step is a step in which water is added and mixed into the treated material (treated pieces) after the grinding step. It is preferable that the treated material and water are mixed in a manner that causes kneading thereof in the water kneading step. In the water kneading step, water is preferably added such that the mass of water after mixing is not less than 5% and not more than 300%, preferably not less than 20% and not more than 200%, and even more preferably not less than 30% and not more than 200% relative to the mass of polyurethane in the treated material. Kneading of the treated material and water in the water kneading step may increase the bulk density of the treated material. The treated material that is kneaded with the water changes from what is referred to as a cake-like state to a slurry-like state.

In the following description, the term "treated material after the grinding step" may be used to encompass kneaded material resulting after water has been added and mixed into treated material (treated pieces) after the grinding step. The water kneading step is not essential in the present recycling method and can be omitted.

The water kneading step can be performed using a commonly known kneader. For example, a ribbon type mixer, a co-kneader, a paddle type mixer, a roll type kneader, or the like can be used.

The hydrolysis step is a step in which polyurethane in the treated material after the grinding step is hydrolyzed under pressure and heating in the presence of water and carbon dioxide. The hydrolysis in the hydrolysis step may be performed in the decomposition treatment tank 4.

In the hydrolysis step, the treated material (treated pieces) supplied from the preceding step is loaded into the decomposition treatment tank 4. Water and carbon dioxide are also supplied into the decomposition treatment tank 4 in addition to the treated material. The decomposition treatment tank 4 includes a tank body 40 of a reactor where the treated material is loaded and a heater 41 that heats the tank body 40. The tank body 40 may include a supply valve 45 that allows or prevents supply of carbon dioxide into the tank body 40 and a release valve 46 that allows or prevents release (exhaust, discharge) of gas (carbon dioxide) from the tank body 40.

Since polyurethane foam has an extremely low bulk density (for example, approximately 0.04 g/cc) in that form (i.e., in an untreated form), the mass of polyurethane foam that can be loaded into the decomposition treatment tank 4 is extremely small. However, in the present recycling method, the bulk density of the treated material (treated pieces) is increased through compressive grinding and is further increased by the water kneading step in a case in which the water kneading step is performed. Therefore, the mass of the treated material (polyurethane) that can be loaded into the decomposition treatment tank 4 is increased in the present recycling method. This makes it possible to reduce the capacity of the decomposition treatment tank 4 that is required for hydrolysis treatment. Consequently, the used amounts of water and carbon dioxide that are supplied into the decomposition treatment tank 4 can also be reduced. Furthermore, reduction of energy required for temperature adjustment and/or pressure adjustment of contents of the decomposition treatment tank 4 is also possible. Accordingly, the present recycling method enables efficient hydrolysis treatment.

In the hydrolysis step, water may be supplied into the decomposition treatment tank 4 such that the mass of water is not less than 5% and not more than 1,000%, preferably not less than 20% and not more than 400%, and more preferably not less than 50% and not more than 300% relative to the mass of polyurethane in the treated material (treated pieces) inside of the decomposition treatment tank 4. The amount of water that is required in the decomposition treatment tank 4 is equal to or greater than the amount of water that is consumed in hydrolysis of polyurethane and is an amount that enables contact between the entire treated material and water.

The partial pressure of carbon dioxide in the hydrolysis step may be set as not lower than 3 MPa and not higher than 20 MPa, and preferably as not lower than 4 MPa and not higher than 15 MPa. This promotes hydrolysis of polyurethane.

The internal temperature of the decomposition treatment tank 4 in the hydrolysis step may be set as 150°C or higher, and preferably as 180°C or higher. Setting the internal temperature of the decomposition treatment tank 4 as 150°C or higher promotes hydrolysis of polyurethane. An internal temperature of 280°C or lower in the decomposition treatment tank 4 results in a high reaction ratio in hydrolysis.

The separation and recovery step is a step of separating a polyol and an amine from a solution that has undergone hydrolysis treatment in the decomposition treatment tank 4. The separation and recovery step can be performed, for example, by supplying water and an organic solvent (for example, chloroform) into the separating tank 5 and performing extraction treatment based on solubility differences of the polyol and the amine in water and the organic solvent. In this example, the amine is extracted into the aqueous phase as a water-soluble component, whereas the polyol is extracted into the oil phase (organic solvent) as a water-insoluble component. After extraction of the polyol and the amine, the polyol and the amine can be separated by separately recovering the oil phase and the aqueous phase. After filtration of the oil phase or aqueous phase as necessary, the organic solvent or water can be evaporated from the oil phase or aqueous phase to thereby concentrate and recover the polyol or amine. Note that the separation and recovery step described above is merely an example. The adoption of other separation and recovery methods in the present recycling method is not ruled out.

In the present recycling method, a solution containing decomposed material that has undergone hydrolysis treatment in the decomposition treatment tank 4 has a low water content and high concentrations of a polyol and an amine. This makes it possible to reduce the amount of an organic solvent that is used in the separation and recovery step and to reduce the amount of energy that is required for removal of water or an organic solvent by evaporation or the like. In other words, this enables more efficient separation and/or recovery of the polyol and the amine.

### EXAMPLES

The following describes the present recycling method based on examples.

In the present examples, polyurethane foam was prepared with a formulation indicated in Table 1, and then treated material (treated pieces) for loading into a decomposition treatment tank was obtained through compressive grinding, etc. based on the present recycling method. In the present examples, the particle diameter and bulk density were measured and the loadable amount in a vessel (capacity 150 mL) imitating a decomposition treatment tank was evaluated as properties of treated material (treated pieces) after a grinding step or after a water kneading step.

**[Table 1]**

| Formulation | Compounding ratio |
|---|---|
| Polyether polyol (OH #56) | 100 |
| TDI80 | 48.8 |
| Water | 3.75 |
| Silicone Surfactant | 0.80 |
| Bis(2-dimethylaminoethyl)ether/Dipropylene glycol = 23:77 | 0.13 |
| DABCO/DPG = 33:67 | 0.13 |
| Stannous octoate | 0.29 |

Note that in Table 1, "Polyether polyol (OH #56)" indicates "polyether polyol (hydroxyl value mgKOH/g)". Moreover, "TDI80" indicates "tolylene diisocyanate (containing approximately 80% of 2,4-tolylene diisocyanate). Furthermore, "Silicone Surfactant" indicates "silicone surfactant". Also, "Bis(2-dimethylaminoethyl)ether" indicates "bis(2-dimethylaminoethyl) ether". Moreover, "DPG" indicates "dipropylene glycol". "DABCO" indicates "triethylenediamine". Furthermore, "Stannous octoate" indicates "tin(II) 2-ethylhexanoate".

The polyurethane foam was separated and cut as lumpy foam pieces of approximately 5 cm in thickness, 10 cm in width, and 30 cm in length and was then subjected to a grinding step. In the grinding step, the foam pieces were subjected to a plurality of passes using a roll press (produced by Seishin Enterprise Co., Ltd.; model: 150; roll diameter: 150 mm; roll axial direction length: 150 mm) to produce treated pieces.

Treated pieces were produced with different numbers of passes in the grinding step. Moreover, treated pieces were produced with and without water addition in the grinding step. Furthermore, treated pieces were produced with and without disintegration treatment in the grinding step. Also, treated pieces were produced with and without a water kneading step after the grinding step.

In a case in which a disintegration step was performed, the disintegration was performed using a commercially available juicer mixer (produced by Panasonic Corporation; model: MX-X701) as a small mixing/disintegration device similar to a Henschel mixer.

In a case in which a water kneading step was performed, water was added dropwise to treated pieces in a state in which the treated pieces had been loaded into a kitchen bowl and was mixed therewith using a spatula.

Table 2 indicates treatment in the grinding step, the inclusion/omission of a water kneading step and the added amount of water (%) in that step, and the particle diameter (µm), bulk density (g/cc), and loadable amount (g) of treated pieces in the present examples. Treatment in the grinding step is indicated by the inclusion/omission of pre-treatment pressing, the added amount of water (%), the number of passes (times) of compressive grinding, and the inclusion/omission of disintegration. Note that the loadable amount is an upper limit for when polyurethane foam is loaded into a subsequently described 150 mL decomposition treatment tank in a state in which the polyurethane foam still contains water.

**[Table 2]**

| | Grinding step | | | | | | | Water kneading step | Properties of treated pieces | | |
|---|---|---|---|---|---|---|---|---|---|---|---|
| | Pre-treatment pressing | First water addition | First compressive grinding | Second water addition | Second compressive grinding | Total number of passes of compressive grinding (times) | Disintegration | | | | |
| | | Added amount of water | Number of passes | Added amount of water | Number of passes | | | Added amount of water | Particle diameter | Bulk density | Loadable amount |
| | | (%) | (times) | (%) | (times) | | | (%) | (µm) | (g/cc) | (g) |
| Comparative example | - | | | | | | | | - | 0.010 | 0.5 |
| Example 1 | Yes | 10 | 1 | - | - | 1 | Yes | - | 458 | 0.110 | 12 |
| Example 2 | Yes | 10 | 2 | - | - | 2 | Yes | - | 251 | 0.155 | 18 |
| Example 3 | Yes | 10 | 4 | - | - | 4 | Yes | - | 151 | 0.204 | 25 |
| Example 4 | Yes | 10 | 4 | 10 | 3 | 7 | Yes | - | 98 | 0.257 | 30 |
| Example 5 | Yes | 10 | 4 | 10 | 8 | 12 | Yes | - | 82 | 0.261 | 30 |
| Example 6 | Yes | 10 | 4 | 10 | 8 | 12 | Yes | 100 | 82 | 0.261 | 60 |

In each of the examples, a first water addition was made after pre-treatment pressing and before compressive grinding as indicated in Table 2. Particularly in Examples 4 to 6, a second water addition was made partway through repeated passes of compressive grinding. In Table 2, repeated passes of compressive grinding straight after the first water addition are denoted as "first compressive grinding". In a case in which addition of water was made partway through repeated passes of compressive grinding, repeated passes of compressive grinding straight after that water addition are denoted as "second compressive grinding". In a comparative example, untreated polyurethane foam is used in that form as indicated in Table 2.

Note that in the pre-treatment pressing, the line pressure is 0.07 t/cm and the clearance between rolls is 1 mm. During compressive grinding, the line pressure is 2 t/cm and the clearance between rolls is 0 mm. Note that the clearance between rolls of the roll press adopted in the present examples is the load-free clearance and that the clearance increases in a state maintaining the line pressure when foam pieces or treated pieces are supplied between the rolls. The rotation speed of the rolls, in terms of circumferential speed of the rolls, is 0.078 m/s to 0.236 m/s (10 rpm to 30 rpm).

It can be seen from the properties of treated pieces indicated in Table 2 that the particle diameter of treated pieces decreases as the total number of passes of compressive grinding increases. It can also be seen that the bulk density of treated pieces increases as the total number of passes of compressive grinding increases.

The loadable amount of treated pieces is also seen to increase in accompaniment to increasing bulk density. Moreover, the adoption of a water kneading step as in Example 6 is seen to further increase the loadable amount as compared to when a water kneading step is not adopted (Examples 1 to 5, and particularly Example 5).

In this manner, treated pieces according to the present examples make it possible to increase the loadable amount in a decomposition treatment tank by 20 times or more as compared to the treated material in the comparative example. Particularly in a case in which a water kneading step is adopted, it is possible to increase the loadable amount in a decomposition treatment tank by 100 times or more.

Treated pieces from Examples 5 and 6 were further subjected to a hydrolysis step in which hydrolysis of polyurethane in the treated pieces was performed under pressure and heating in the presence of water and carbon dioxide and were evaluated as in Examples 7 to 17 indicated in Table 3.

First, treated pieces from Example 5 or Example 6 and water were charged to a reactor having a capacity of 150 mL in accordance with the charged amount (g) and added amount of water (g) indicated in Table 3, and this reactor was loaded into an autoclave made of stainless steel. Note that the charged amount indicated in Table 3 is the mass of polyurethane in the treated pieces (value obtained after subtracting the mass of water in the treated pieces). Moreover, the added amount of water indicated in Table 3 is the mass of water present inside of the reactor and is the total mass of water that is already contained in the treated pieces and water that is newly added into the reactor. Next, in accordance with the pressure (MPa), temperature (°C), and time (hr) indicated in Table 3, carbon dioxide was injected into the autoclave with a release valve of the autoclave in a closed state until the inside of the autoclave reached a specific pressure, a supply valve of the autoclave was then closed, and then the autoclave was heated to a specific temperature by a heater and was held at that temperature for a specific time to cause reaction (hydrolysis). The holding time for hydrolysis may also be referred to below as the reaction time.

**[Table 3]**

| | Treated pieces | Charged amount | Added amount of water | Pressure | **Temperature** | Time | Decomposition performance | |
|---|---|---|---|---|---|---|---|---|
| | | | | | | | Recovered amount of water-insoluble component | Separation yield |
| | | (g) | (g) | (MPa) | (°C) | (hr) | (g) | (%) |
| Example 7 | Example 5 | 30 | 30.0 | 6.9-8.8 | 230 | 0.5 | 21.2 | 100 |
| Example 8 | Example 5 | 30 | 60.0 | 7.5-8.8 | 230 | 0.5 | 19.8 | 93.4 |
| Example 9 | Example 5 | 30 | 90.0 | 7.0-9.0 | 230 | 0.5 | 18.9 | 92.2 |
| Example 10 | Example 6 | 40 | 60.0 | 8.0-9.2 | 230 | 0.5 | 25.4 | 89.9 |
| Example 11 | Example 6 | 60 | 60.0 | 7.5-10.0 | 230 | 0.5 | 39.8 | 93.9 |
| Example 12 | Example 6 | 50 | 75.0 | 7.5-10.0 | 230 | 0.5 | 26.4 | 74.7 |
| Example 13 | Example 6 | 60 | 60.0 | 7.5-10.0 | 230 | 2.0 | 35.2 | 83.0 |
| Example 14 | Example 6 | 60 | 60.0 | 7.7-10.5 | 240 | 0.5 | 38.0 | 89.5 |
| Example 15 | Example 6 | 50 | 75.0 | 7.4-8.5 | 190 | 16.0 | 33.1 | 93.8 |
| Example 16 | Example 5 | 30 | 22.5 | 6.9-7.1 | 230 | 0.5 | 21.2 | 100 |
| Example 17 | Example 5 | 30 | 15.0 | 6.8-7.0 | 230 | 0.5 | 21.2 | 100 |

After the holding (after reaction), the autoclave was cooled using ice water as a refrigerant, and the temperature of the reactor inside of the autoclave was rapidly cooled (to 100°C or lower within 3 minutes). The refrigerant was replaced as appropriate so as to perform cooling for roughly 15 minutes in total, and, once the reactor reached room temperature or lower, the release valve of the autoclave was opened to release carbon dioxide. Thereafter, the hydrolyzed material of polyurethane (hereinafter, referred to as "decomposed material") was withdrawn from the reactor and was transferred into a vessel serving as a separating tank.

In addition, water and chloroform were added into the vessel into which the decomposed material had been transferred, extraction treatment of a water-soluble component and a water-insoluble component in the decomposed material was performed based on differences in solubility in water and the organic solvent, and the water-soluble component and the water-insoluble component (oily residue having a liquid form) were separately recovered. The obtained water-insoluble component was subjected to proton-nuclear magnetic resonance (¹H-NMR) measurement while dissolved in deuterated chloroform (CDCl₃) and gel permeation chromatography (GPC) measurement while dissolved in N,N-dimethylformamide. A portion of the water-insoluble component was confirmed to be a polyether polyol having a structure derived from tolylene diisocyanate through comparison with the raw material polyether polyol as a reference.

The water-insoluble component was subjected to vacuum drying treatment, was subsequently weighed, and the determined value was taken to be the recovered amount (g) of the water-insoluble component. The decomposition yield (%) of the water-insoluble component was calculated based on this amount. The decomposition yield is a value obtained by dividing the recovered amount of the water-insoluble component by the theoretical maximum recoverable amount, which is calculated based on the formulation indicated in Table 1.

As can be seen from Table 3, the treated pieces of Examples 5 and 6 having increased bulk density displayed a high decomposition yield of more than 74% under the conditions of each of Examples 7 to 17.

It can be seen that in Examples 7 to 17, the separation yield is high in cases in which a ratio of the added amount of water relative to the charged amount was 1 or was less than 1. Consequently, in the present recycling method, it is possible to reduce the content of water and increase the concentrations of a polyol and an amine in a solution containing decomposed material. Accordingly, the present recycling method is thought to enable reduction of energy required for removal of water by evaporation or the like. In other words, the present recycling method is thought to enable efficient separation and/or recovery of a polyol and an amine.

In this manner, the treated materials (treated pieces) after treatment according to the present examples enable the realization of reduction of size of a decomposition treatment tank required for hydrolysis treatment, reduction of the amounts of water and carbon dioxide that are used in hydrolysis treatment, and reduction of energy required in hydrolysis treatment as compared to when using the treated material according to the comparative example and enable efficient hydrolysis treatment. In addition, since the used amount of water that is required in hydrolysis treatment can be reduced, it is also possible to reduce that amount of solvent that is used in a separation and recovery step after hydrolysis treatment, to realize reduction of energy required for removal of water or an organic solvent, and to perform separation and recovery treatment in an efficient manner.

As set forth above, it is possible to provide an efficient method of recycling polyurethane foam.

It should be noted that embodiments disclosed in the present specification are merely examples and that embodiments of the present disclosure are not limited thereto and can be modified as appropriate to an extent not deviating from the aim of the present disclosure.

### INDUSTRIAL APPLICABILITY

The present disclosure is applicable in a method of recycling polyurethane foam.

### REFERENCE SIGNS LIST

- 1: separating and cutting device
- 100: plant
- 2: roll pressing device
- 21: roll
- 22: roll
- 28: raw material
- 29: ground material
- 3: stirrer
- 4: decomposition treatment tank
- 40: tank body
- 41: heater
- 45: supply valve
- 46: release valve
- 5: separating tank
- C: clearance
- D1: diameter
- D2: diameter
- F: load

## Claims

1. A method of recycling polyurethane foam comprising:
a grinding step of passing polyurethane foam serving as treated material between a pair of rolls and compressing and grinding the polyurethane foam between the pair of rolls; and
a hydrolysis step of hydrolyzing the treated material after the grinding step.

2. The method of recycling polyurethane foam according to claim 1, wherein a load applied between the pair of rolls in the grinding step, per unit length in an axial direction of the rolls, is not less than 1 t/cm and not more than 3 t/cm.

3. The method of recycling polyurethane foam according to claim 2, wherein two or more passes of passing the polyurethane foam between the pair of rolls are performed in the grinding step.

4. The method of recycling polyurethane foam according to claim 2, wherein the hydrolysis step is performed at a temperature of 150°C or higher in the presence of carbon dioxide having a partial pressure of 3 MPa or higher.

5. The method of recycling polyurethane foam according to any one of claims 1 to 4, further comprising a water addition step of adding water to the treated material, wherein the water addition step is performed before the hydrolysis step.

6. The method of recycling polyurethane foam according to claim 5, wherein
one or more passes of passing the polyurethane foam between the pair of rolls are performed in the grinding step, and
the water addition step is performed during the passes or between the passes.

7. The method of recycling polyurethane foam according to claim 5, wherein water is added in the water addition step such that a mass of water is not less than 5% and not more than 100% relative to a mass of polyurethane in the treated material.

8. The method of recycling polyurethane foam according to any one of claims 1 to 4, wherein the treated material after the grinding step has an average particle diameter, based on a particle size distribution by volume, of 160 µm or less.

9. The method of recycling polyurethane foam according to any one of claims 1 to 4, wherein the treated material after the grinding step has a static bulk density of 0.10 g/cc or more.

10. The method of recycling polyurethane foam according to claim 5, comprising, as the water addition step, a water kneading step of adding and mixing water into the treated material after the grinding step, wherein water is added in the water kneading step such that a mass of water is not less than 5% and not more than 300% relative to a mass of polyurethane in the treated material.

11. The method of recycling polyurethane foam according to any one of claims 1 to 10, further comprising a water addition step of adding water to the treated material, wherein
the water addition step is performed before the hydrolysis step, and
water is added in the water addition step such that a mass of water is not less than 20% and not more than 300% relative to a mass of polyurethane in the treated material.

12. The method of recycling polyurethane foam according to claim 11, wherein
the water addition step includes:
an in-grinding water addition step of adding water to the treated material during the grinding step; and
a water kneading step of adding and mixing water into the treated material after the grinding step.

13. The method of recycling polyurethane foam according to claim 12, wherein water is added to the treated material undergoing the grinding step in the in-grinding water addition step such that a mass of water is not less than 3% and not more than 20% relative to a mass of polyurethane in the treated material.

14. The method of recycling polyurethane foam according to claim 12 or 13, wherein
hydrolysis in the hydrolysis step is performed in a decomposition treatment tank, and
the treated material after the water addition step is loaded into the decomposition treatment tank.
